Europäisches Patentamt

European Patent Office

Office européen des brevets

(11) Veröffentlichungsnummer: **0 251 378**
**A2**

# (12) EUROPÄISCHE PATENTANMELDUNG

(21) Anmeldenummer: 87201139.0

(22) Anmeldetag: 16.06.87

(51) Int. Cl.⁴: **H01B 5/10**

(30) Priorität: 24.06.86 DE 3621158

(43) Veröffentlichungstag der Anmeldung:
07.01.88 Patentblatt 88/01

(84) Benannte Vertragsstaaten:
AT CH DE FR GB IT LI NL

(71) Anmelder: **Philips Patentverwaltung GmbH**
**Wendenstrasse 35 Postfach 10 51 49**
**D-2000 Hamburg 1(DE)**

(84) **DE**

(71) Anmelder: **N.V. Philips' Gloeilampenfabrieken**
**Groenewoudseweg 1**
**NL-5621 BA Eindhoven(NL)**

(84) **CH FR GB IT LI NL AT**

(72) Erfinder: **Brüggendieck, Siegfried**
**Peter Walterscheidtstrasse 19**
**D-5060 Berg. Gladbach(DE)**

(74) Vertreter: **Koch, Ingo, Dr.-Ing. et al**
**Philips Patentverwaltung GmbH**
**Wendenstrasse 35 Postfach 10 51 49**
**D-2000 Hamburg 1(DE)**

(54) **Elektrischer Freileiter mit einer optischen Nachrichtenleitung.**

(57) Die Erfindung betrifft einen elktrischen Freileiter mit einer optischen Nachrichtenleitung, die in einer Hohlkammer des Freileiters geführt ist, deren Innendurchmesser wesentlich größer als der Außendurchmesser der optischen Nachrichtenleitung ist, und mit einer die verbleibenden Zwischenräume zur Innenwandung der Hohlkammer ausfüllenden Füllmasse. Das Eindringen von Wasser wird auch bei Einwirkung höherer Temperaturen dadurch dauerhaft verhindert, daß die Füllmasse ein vernetztes Elastomer ist, dessen Shore-A-Härte einen Wert zwischen 20 und 50 hat.

Fig.1

## Elektrischer Freileiter mit einer optischen Nachrichtenleitung

Die Erfindung bezieht sich auf einen elektrischen Freileiter mit einer optischen Nachrichtenleitung, die in einer Hohlkammer des Freileiters geführt ist, deren Innendurchmesser wesentlich größer als der Außendurchmesser der optischen Nachrichtenleitung ist, und mit einer die verbleibenden Zwischenräume zur Innenwandung der Hohlkammer ausfüllenden Füllmasse.

Bei einem nach der DE-PS 28 20 510 bekannten derartigen Freileiter ist vorgesehen, daß der verbleibende Zwischenraum zwischen der Innenwandung der Hohlkammer und der optischen Nachrichtenleitung zur Sicherung einer Gleitmöglichkeit zwischen den einzelnen optischen Elementen und auch zur Verhinderung des Eindringens von Wasser mit einem fettartigen Material gefüllt werden kann. Eine solche fließfähige Masse kann jedoch insbesondere bei höheren Temperaturen durch die umgebenden elektrischen Leiterelemente abtropfen, so daß nach längerer Zeit die Dichtwirkung gegen das Eindringen von Wasser verloren geht.

Der Erfindung liegt die Aufgabe zugrunde, eine Anordnung der eingangs genannten Art derart zu gestalten, daß das Eindringen von Wasser selbst bei Einwirkung höherer Temperaturen dauerhaft verhindert ist.

Die Lösung gelingt dadurch, daß die Füllmasse ein vernetztes Elastomer ist, dessen Shore-A-Härte einen Wert zwischen 20 und 50 hat.

Gegenüber der bekannten Anordnung wird darauf verzichtet, der optischen Nachrichtenleitung eine freie Relativbewegung zum Freileiter zu ermöglichen. Da die feste Füllmasse jedoch sehr weichelastisch ist, ergibt sich eine so weiche mechanische Kopplung der optischen Nachrichtenleitung an die umgebenden Freileiterelemente, daß die Gefahr von Beschädigungen der empfindlichen Lichtwellenleiter nicht merkbar gegenüber der bekannten Lösung erhöht wird. Andererseits ist ein Elastomer nicht fließfähig und auch beständig gegen Wasser.

Vorzugsweise sind weiche Elastomere mit einer Shore-A-Härte von 25 bis 35 geeignet. Die Verwendung von Elastomeren mit einer Kriechstromfestigkeit, die der Stufe KA 3c nach DIN 53 480 entspricht, ergibt sich durch die erfindungsgemäße Lösung ein weiterer entscheidender Vorteil. Die optischen Nachrichtenleiter können dann am Freileitungsmast ohne Verwendung von Zusatzeinrichtungen zur Potentialtrennung oder von besonderen Ankopplungseinheiten selbst aus einem Phasenseil für Mittelspannung im Bereich von 30 kV direkt herausgeführt werden. Dabei zeigte sich, daß die optische Nachrichtenleitung bereits nach einer Länge von etwa 3 m, gemessen ab dem Austrittspunkt aus dem Freileitungsseil, geerdet werden darf. Zusätzliche Maßnahmen zur Erhöhung der Kriechstromfestigkeit oder zur Verlängerung des Kriechweges sind überflüssig.

Besonders geeignet zur Umhüllung der optischen Nachrichtenleitung ist Silikon-Kautschuk (SiR), doch Äthylen-Propylen-Kautschuk (EPR) hat sich ebenfalls als geeignet erwiesen. Diese Werkstoffe sind sowohl genügend weichelastisch als auch kriechstromfest.

Bei der erfindungsgemäßen Lösung ist die Verwendung einer an sich bekannten optischen Nachrichtenleitung vorzuziehen, die aus mindestens einem LWL besteht, der locker mit Überlänge in einer Hülle angeordnet ist. Dabei können in ebenfalls an sich bekannter Weise die LWL innerhalb der Hülle in einer gelartigen Masse eingebettet sein. Bei solchen Ausführungsformen können durch die weichelastische Außenschicht übertragene geringe mechanische Kräfte keine nachteiligen Wirkungen auf die LWL ausüben.

Die Erfindung wird anhand der Beschreibung von in der Zeichnung dargestellten vorteilhaften Ausführungsbeispielen näher erläutert.

Figur I zeigt einen Querschnitt durch eine erste Ausführungsform der Erfindung

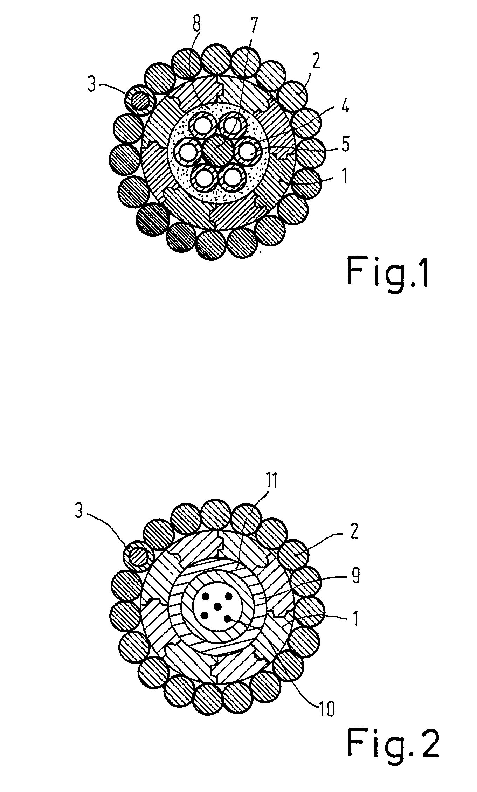

Figur 2 zeigt einen Querschnitt durch eine zweite Ausführungsform der Erfindung

In den Figuren sind die elektrisch leitfähigen Elemente des Freileitungsseils jeweils gleich ausgebildet.

Durch formschlüssig ineinandergreifende Aluminium-Profildrähte I, welche in den Ausführungsbeispielen von einer Lage Runddrähte 2 und/oder 3 umgeben sind, wird eine Hohlkammer gebildet. Die Runddrahte 2 bestehen aus Aldrey, während die Runddrähte 3 in vorzugsweise geringerer Anzahl als die Aldrey-Drähte 2 und mit diesen wechselnd als Al-beschichtete Strahldrähte ausgebildet sind.

In Figur I besteht der optische Nachrichtenleiter aus 6 Hohladern, nämlich aus mit Abstand von einer Hülle 4 umgebenen Lichtwellenleitern (LWL) 5, welche um ein GFK-Stützelement 7 verseilt sind. Einige der umhüllten Lichtwellenleiter 5 können durch Trensen ersetzt sein, welche dann den gleichen Durchmesser aufweisen wie die Hüllen 4.

Erfindungsgemäß ist zwischen der von den Profildrähten I gebildeten Innenwandung und den mit Abstand benachbarten Hohladern ein ausfüllender Silikon-Kautschuk 8 angeordnet, welcher auch in die Zwischenräume zwischen den Hüllen 4 eindringen kann.

In Figur 2 sind in einer einzigen Hülle 9 mehrere LWL I0 mit Überlänge innerhalb einer gelartigen Masse untergebracht. Zwischen der Hülle 9 und den Profildrähten I befindet sich die erfindungsgemäß vorzusehende weichelastische Schicht II, welche - ebenso wie im Falle der Figur I die Schicht 8 - durch einen Extrusionsvorgang auf die optische Nachrichtenleitung aufgebracht werden kann.

Da die LWL mit Überlänge in einem Hohlraum beweglich sind, kann sich auch ein strammes Anliegen der Profildrähte I an der Hülle II oder der Hülle 8 nicht schädlich auf die LWL auswirken.

An einem Mast kann die optische Nachrichtenleitung mitsamt der weichelastischen Hülle II bzw. 8 aus einem Erdseil oder auch einem Phasenseil herausgeführt werden. Bereits nach relativ kurzer freier Länge ist eine Erdung erlaubt, ohne daß besondere Schutzeinrichtungen erforderlich sind. Insbesondere Silikon-Kautschuk ist hervorragend kriechstromfest.

Die in den Figuren dargestellten Ausführungen ergeben in ihrer Gesamtkonzeption hervorragend geeignete robuste Freileitungsseile, deren LWL zuverlässig auf Dauer geschützt sind. Die Herstellung von Mastanschlüssen ist auf einfache Weise möglich.

## Ansprüche

I. Elektrischer Freileiter mit einer optischen Nachrichtenleitung, die in einer Hohlkammer des Freileiters geführt ist, deren Innendurchmesser wesentlich größer als der Außendurchmesser der optischen Nachrichtenleitung ist, und mit einer die verbleibenden Zwischenräume zur Innenwandung der Hohlkammer ausfüllenden Füllmasse,
dadurch gekennzeichnet, daß die Füllmasse( 8, II) ein vernetztes Elastomer ist, dessen Shore-A-Härte einen Wert zwischen 20 und 50 hat.

2. Freileiter nach Anspruch I,
dadurch gekennzeichnet , daß die Shore-A-Härte einen Wert zwischen 25 und 35 hat.

3. Freileiter nach Anspruch I oder 2,
dadurch gekennzeichnet, daß das vernetzte Elastomer (8,II) eine Kriechstromfestigkeit aufweist, die der Stufe KA 3 c nach DIN 53 480 genügt.

4. Freileiter nach einem der Ansprüche I bis 3,
dadurch gekennzeichnet, daß das Elastomer (8,II) ein Silikon-Kautschuk (SiR) ist.

5. Freileiter nach einem der Ansprüche I bis 3,
dadurch gekennzeichnet, daß das Elastomer (8,II) ein Äthylen-Propylen-Kautschuk (EPR) ist.

6. Freileiter nach einem der Ansprüche I bis 5,
dadurch gekennzeichnet, daß die optische Nachrichtenleitung aus mindestens einem LWL (5,I0) besteht, der locker mit Überlänge in einer Hülle (4,9) angeordnet ist.

7. Freileiter nach einem der Ansprüche I bis 6,
dadurch gekennzeichnet, daß die LWL (5,I0) innerhalb der Hülle (4,9) in einer gelartigen Masse eingebettet sind.

Fig.1

Fig.2

PHD 86-085